**Europäisches Patentamt**

(19) **European Patent Office**

**Office européen des brevets**

(11) Publication number: **0 227 393 B1**

# EUROPEAN PATENT SPECIFICATION

(45) Date of publication of patent specification:
**22.02.95 Bulletin 95/08**

(51) Int. Cl.$^6$: **H04B 7/155**

(21) Application number: **86309705.1**

(22) Date of filing: **12.12.86**

(54) **Radio repeater with spillover measurement.**

(30) Priority: **16.12.85 JP 281219/85**
**15.05.86 JP 111088/86**
**24.09.86 JP 223496/86**

(43) Date of publication of application:
**01.07.87 Bulletin 87/27**

(45) Publication of the grant of the patent:
**22.02.95 Bulletin 95/08**

(84) Designated Contracting States:
**DE FR GB SE**

(56) References cited:
**DE-A- 2 729 013**
**GB-A- 613 902**
**JP-A-60 186 133**
**US-A- 1 397 093**
**US-A- 2 106 806**
**US-A- 3 611 139**

(73) Proprietor: **NIPPON TELEGRAPH AND TELEPHONE CORPORATION**
**1-6 Uchisaiwaicho 1-chome**
**Chiyoda-ku**
**Tokyo (JP)**
Proprietor: **NTT MOBILE COMMUNICATIONS NETWORK INC.**
**10-1, Toranomon 2-chome**
**Minato-ku, Tokyo 105 (JP)**

(72) Inventor: **Odate, Hitoshi**
**510-7-4-202, Tsukui**
**Yokosuka-shi Kanagawa (JP)**
Inventor: **Takahashi, Hisao**
**1-2-2-12, Kaga-machi**
**Ichigaya**
**Shinjuku-ku Tokyo (JP)**
Inventor: **Suzuki, Toshio**
**2-30-1, Highland**
**Yokosuka-shi Kanagawa (JP)**
Inventor: **Nojima, Toshio**
**1-27-5-103, Highland**
**Yokosuka-shi Kanagawa (JP)**
Inventor: **Nishiki, Sadayuki**
**9-2-5-101, Sugita**
**Isogo-ku**
**Yokohama-shi Kanagawa (JP)**
Inventor: **Fujii, Teruya**
**9-2-12-B-141, Sugita**
**Isogo-ku**
**Yokohama-shi Kanagawa (JP)**

(74) Representative: **Skone James, Robert Edmund et al**
**GILL JENNINGS & EVERY**
**Broadgate House**
**7 Eldon Street**
**London EC2M 7LH (GB)**

EP 0 227 393 B1

## Description

This invention relates to a radio repeater system which amplifies a received signal and transmits the amplified signal using the same frequency for transmitting as for receiving.

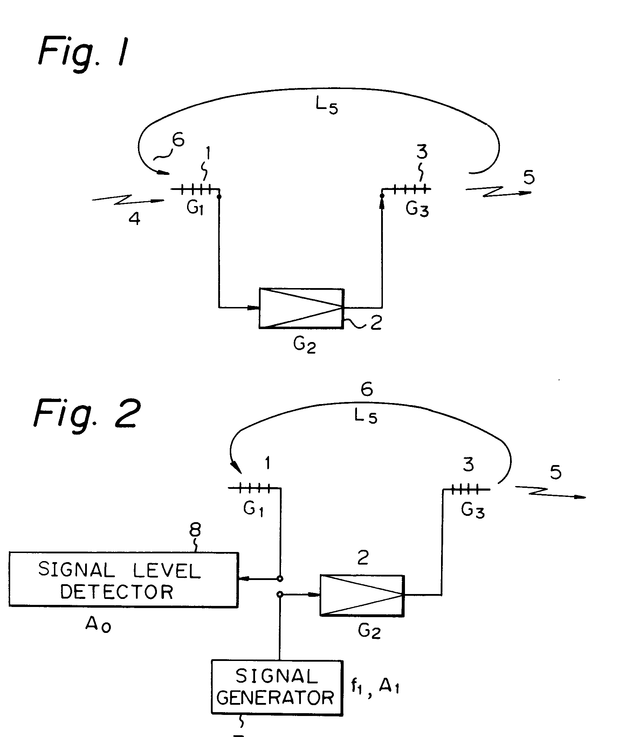

Fig. 1 of the accompanying drawings shows the general concept of a prior repeater system in which the transmitting frequency is the same as the receiving frequency. The repeater has a receiving antenna 1 with a gain of $G_1$, an amplifier 2 with a gain of $G_2$, and a transmitting antenna 3 with a gain $G_3$. A received signal 4 is amplified by the amplifier 2, which provides a transmit signal 5. The frequency of the transmitted signal 5 is the same as that of the received signal 4, and the total gain in the repeater is $G_1 \times G_2 \times G_3$. Spillover of the transmitted signal at the receiving antenna 1 is indicated by an arrow 6. If the transmission loss between the transmitting antenna and the receiving antenna is $L_5$, the level of the signal 6 is $1/L_5$ as high as the signal 5.

If the transmission loss $L_5$ between the antennas is less than the total gain of the repeater ($L_5 < G_1 \times G_2 \times G_3$), the system is unstable, and will oscillate and thereby disturb communication. Therefore, the directivity of the antennas, and the amplifier of the repeater, are designed so that the transmission loss $L_5$ between the antennas is considerably larger than the total repeater gain.

Fig. 2 is a block diagram of a prior repeater which measures the transmission loss between the antennas. A test signal with a level $A_1$ and a frequency $f_1$ from a signal generator 7 is applied to the amplifier 2 which has a gain $G_2$, so that the signal of the frequency $f_1$ is transmitted from the antenna 3 which has a gain $G_3$. A signal level detector 8 measures the spillover signal 6 at the receiving antenna 1 which has a gain $G_1$. If the measured value is $A_0$, the transmission loss $L_5$ is;

$$L_5 = (A_1/A_0) \times G_1 \times G_2 \times G_3$$

Therefore, the value $G_2$ is designed so that $L_5 1 \times G_2 \times G_3$ is satisfied.

However, it has the disadvantage that this measurement is not in real-time. Therefore, even if the transmission loss is large when the system is installed or designed, the transmission loss could subsequently be reduced by changes in the surroundings of the system. For instance, if a body which reflects electric waves is built close to the antennas, the transmission loss between the antennas would be reduced as compared with that of the initial value.

Another prior system for measuring transmission loss is shown in JP-A-29921/74, in which the transmitted signal is amplitude-modulated by a pilot signal, which is detected by the receiver. In this case, the desired received signal and the undesired interference signal (the spillover signal) are combined, and since the phase of the interference signal does not coincide with that of the desired receive signal, the level detected by an envelope detector is frequency-dependent. Therefore, accurate measurement of the spillover signal is impossible by using a simple method such as an envelope detector method.

A further prior system for measuring transmission loss of a spillover signal is shown in JP-A-2489/81, in which a pilot signal is transmitted and the received level of that pilot signal is measured. However, it has the disadvantages that it must have an additional band for transmitting the pilot signal, and that the transmission loss at the pilot frequency only is measured, and the transmission loss at other frequencies cannot be measured.

Another prior system for measuring transmission loss of a spillover signal is shown in US-A-4 475 243, in which the time delay of the spillover signal is measured and the correlation between the transmitted signal and the received signal is measured in order to compensate for the spillover signal. However, it has the disadvantage that accurate measurement is impossible if the time delay is small, as is the case of a booster for mobile communications.

A further prior system for measuring transmission loss of a spillover signal is shown in JP-A-66025/79, in which the output power of the transmitter is measured. If the system oscillates, the transmitted power will increase. Oscillation of the system can therefore be detected by measuring the transmitted power, and the transmitter can be turned off or its amplification reduced. However, this technique has the disadvantage that the abnormal condition is detected only by the oscillation, and the system does not recover even after the possibility of oscillation disappears.

DE-A-2729013 describes a combined transmitter/receiver which transmits at the same frequency at which it receives. An audio frequency tag signal is superimposed on the transmit signal e.g. by amplitude modulation and an evaluation circuit in the receiving section of the transmitter/receiver responds to this tag signal so that the required attenuation and phase can be derived to compensate for echoes from the transmitting section.

It is an object of the present invention to provide an improved radio repeater system.

According to the invention there is provided a repeater comprising a receiving antenna for receiving a radio signal; an amplifier for amplifying the signal thus received; a transmitting antenna for transmitting the amplified signal; and a signal detector which measures in the received signal a component of the received signal to determine the level of spillover from the transmitting section to the receiving section characterised by frequency offset means to offset the transmitted frequency by a frequency in the range 50Hz to 200Hz such that the offset frequency is higher than the fading frequency of the receiver and is sufficiently low so that it does not affect the operation of remote receivers receiving the transmitted signal; wherein the signal detector is an envelope detector responsive to the receipt of a signal at the offset frequency to determine the level of spillover from the transmitting antenna to the receiving antenna by measuring the beat of the input signal envelope.

Embodiments of the invention will now be described, by way of example, with reference to the accompanying drawings, in which

Fig. 1 is a block diagram of a prior booster;

Fig. 2 is a block diagram of a prior apparatus for measuring the transmission loss between a transmitting antenna and a receiving antenna;

Fig. 3 is a block schematic diagram of a first repeater system according to the present invention;

Fig. 4 shows the spectrum of a signal applied to a signal detector in Fig. 3;

Fig. 5 is a block schematic diagram of a second embodiment of a radio repeater system according to the invention;

Fig. 6 is a block schematic diagram of a third embodiment of a radio repeater system according to the invention;

Fig. 7 is a block schematic diagram of a fourth embodiment of a radio repeater system according to the invention;

Fig. 8 shows experimental curves obtained with the present invention;

Fig. 9 is a block schematic diagram of a fifth embodiment of a radio repeater system according to the invention;

Fig. 10 is a block schematic diagram of a frequency converter in the system of Fig. 9;

Fig. 11 is a vector diagram which shows the operation of the frequency converter of Fig. 10;

Fig. 12 is a block schematic diagram of a sixth embodiment of a radio repeater system according to the invention;

Fig. 13 is a block schematic diagram of a seventh embodiment of a radio repeater system according to the invention; and

Fig. 14 is a block schematic diagram of a gain control circuit in the system of Fig. 13.

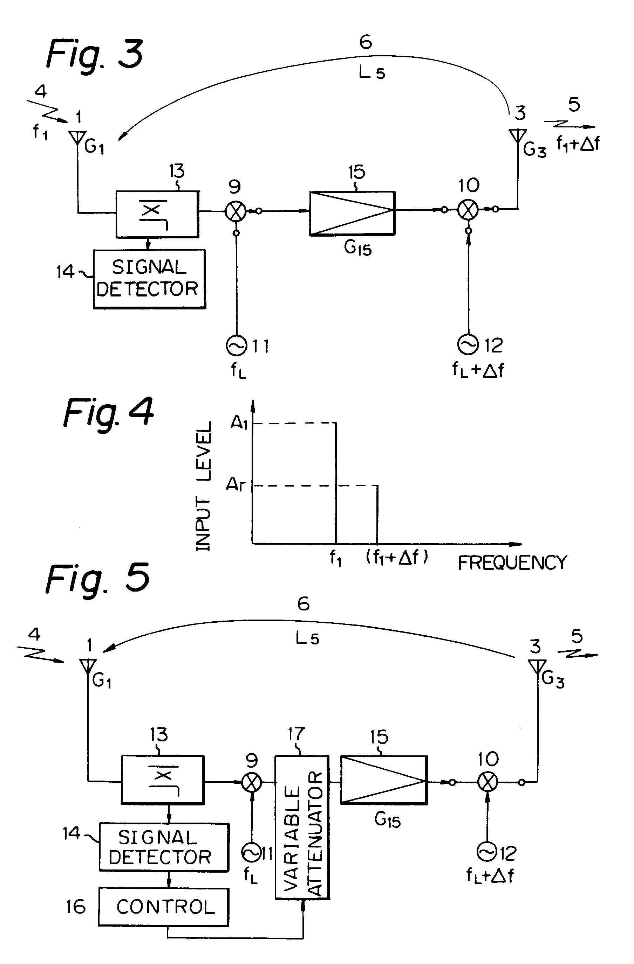

Referring to Fig. 3 of the drawings, a radio repeater system or booster according to the invention comprises a receiving antenna 1 which receives a signal 4 and a transmitting antenna 3 which transmits a signal 5. A spillover signal 6 passes from the transmitting antenna to the receiving antenna. The system further comprises a first mixer 9, a second mixer 10, a first local oscillator 11, a second local oscillator 12, sampling means 13 such as a directional coupler, a signal detector 14 and an amplifier 15.

In operation, the signal 4 of frequency $f_1$ and level $A_1$ is received by the receiving antenna 1 which outputs a signal of level $G_1A_1$, where $G_1$ is the gain of the receiving antenna. The received signal is frequency-converted by the first mixer 9 so that the output frequency of the mixer 9 is an intermediate frequency $f_{IF}$. The intermediate frequency $f_{IF}$ is amplified by the amplifier 15 which has a gain of $G_{15}$. The output of the amplifier 15 is applied to the second mixer 10 so that the intermediate frequency $f_{IF}$ is converted to a radio frequency $f_1$ with small frequency shift $\Delta f$. Therefore, the frequency transmitted from the antenna 3 is $f_1+\Delta f$. The frequency difference $\Delta f$ between the received frequency $f_1$ and the transmitted frequency $f_1+\Delta f$ is achieved by shifting the frequency of the second local oscillator 12 from the frequency $f_L$ of the first local oscillator 11 so that the frequency of the second local oscillator is $f_L+\Delta f$, where $f_L$ is $f_1-f_{IF}$.

The level $A_2$ of the signal 5 from the transmitting antenna 3 is given by:

$$A_2 = A_1 \times G_1 \times G_{15} \times G_3 \times G_4 \times G_5 = A_1 \times G_{all}$$

where $G_4$ is the gain of the mixer 9, $G_5$ is the gain of the second mixer 10, and $G_{all}$ is the total gain of the repeater.

A part of the transmitted signal leaks to the receiving antenna 1 as the spillover signal 6 with a transmission loss $L_5$ between the transmitting antenna 3 and the receiving antenna 1. A part of the signal received by the antenna 1 is sampled by the directional coupler 13 which is located upstream of the first mixer 9, and the sampled signal is applied to the signal detector 14.

The signal applied to the signal detector 14 is the sampled combination of the service signal 4 of frequency $f_1$, and the spillover signal 6 of frequency $f_1+\Delta f$ and of amplitude $A_r=A_2/L_5$. The spectra of those two signals are shown in Fig. 4. If it is assumed that the received service signal 4 is $e_i(A_1\cos2\pi f_1 t)$, and the spillover signal 6 is $e_r(A_r\cos(2\pi f_1 t+2\pi\Delta ft)$, then the input signal to the signal detector 14 is $e_i+e_r$. The signal detector 14 is simply implemented by using, for instance, an envelope detector. The output of the envelope detector for that signal is given by

$$(A_1^2 + 2A_1A_r\cos2\pi\Delta ft + A_r^2)^{1/2}$$

Since $A_1 \gg A_r$, the envelope of the input signal is taken as

$$A_1 + A_r\cos2\pi\Delta ft$$

Hence, the envelope of the input signal shows a beat of frequency $\Delta f$. The ratio of DC and AC elements of the envelope is;

$$A_r/A_1 = A_2/(L_5 \times A_1) = G_{all}/L_5$$

Therefore, the loop gain of the spillover signal is directly obtained by measuring the beat of the input signal envelope.

The offset frequency $\Delta f$ is selected so that it is higher than the fading frequency which is about 40Hz (in the case of a 900MHz radio frequency band and about 50 km/h vehicle speed) depending upon the speed of the vehicle which carries the telephone, and lower than the margin of the receiver. Preferably, the offset frequency is lower than 1/10 of the channel period. In a practical design, the offset frequency $\Delta f$ is se-

lected around 50Hz-200Hz.

The above embodiment has the advantages that no particular measuring apparatus is necessary in addition to the booster itself, and the transmission loss can be measured when the system is in service.

Fig. 5 shows a second embodiment of the invention. In the figure, reference numerals 1 to 15 relate to the same components as in Fig. 3. Additionally, the system comprises a control circuit 16 and a variable attenuator 17. The control circuit 16 controls the variable attenuator 17 according to the spillover attenuation $L_5$ which is monitored by the signal detector 14, so that the input level to the amplifier 15 is adjusted. The adjustment of the variable attenuator 17 is equivalent to adjustment of the gain of the amplifier 15. If the transmission loss $L_5$ between the antennas is large, the attenuation in the variable attenuator 17 is adjusted to be small so that the gain of the repeater is high. On the other hand, if the transmission loss $L_5$ is small, the gain of the repeater is adjusted to be low so that the system does not oscillate.

Therefore, the gain of the repeater may be set at the maximum value within the range over which the system does not oscillate. In the prior system, the gain of the repeater is lower than that of the present invention, because the gain of the prior repeater is fixed to a value such that the system is in the worst condition. Therefore, even if the transmission loss is large in the prior systems, the gain is not adaptively increased in such systems.

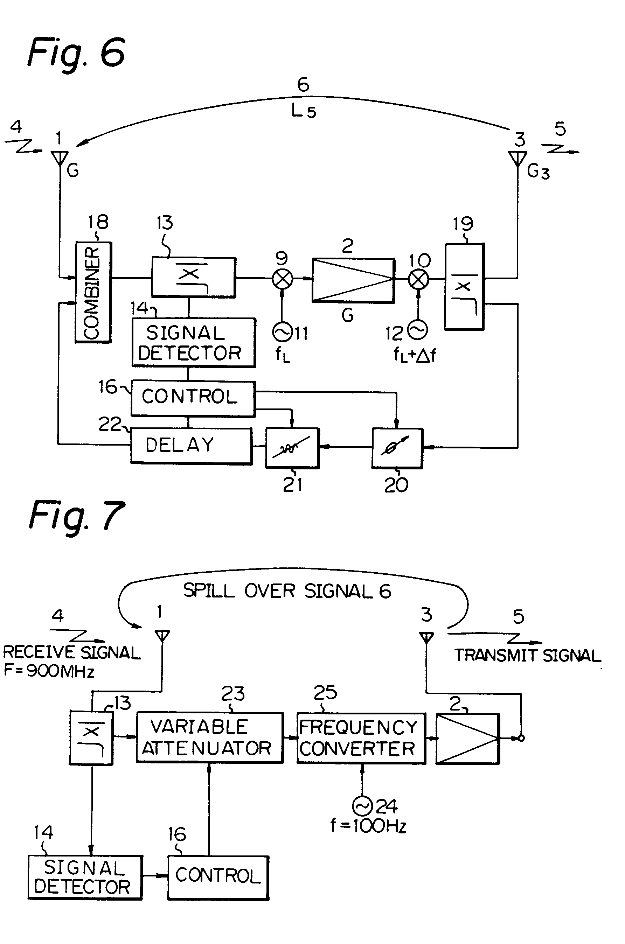

Fig. 6 shows a third embodiment of the invention. In the figure, reference numerals 1 to 15 relate to the same components as in Fig. 3. Additionally, the system comprises a control circuit 16, a combiner 18, sampling means 19, such as a directional coupler, a variable phase shifter 20, a variable-gain attenuator 21, and a delay circuit 22. The output of the second mixer 10 is divided by the directional coupler 19. One output of the directional coupler 19 is transmitted into the air via the transmitting antenna 3, and the other output of the coupler is applied through the variable phase shifter 20, the variable attenuator 21 and the delay circuit 22 to the combiner 18, which also receives the spillover signal 6, and the received signal 4. The control circuit 16 controls the variable phase shifter 20, the variable attenuator 21 and the delay circuit 22 so that the output signal from the delay circuit 22 has the same level, the opposite phase and the same arrival time as those of the spillover signal 6, according to the measurement of the spillover signal by the detector 14. The spillover signal is thereby cancelled in the combiner 18.

The embodiment of Fig. 6 has the advantage that the gain of the booster is not restricted by the spillover signal.

Fig. 7 is a modification of the embodiment of Fig.5. The feature of Fig. 7 is that the repeater operates in the radio frequency band, whereas the embodiment of Fig. 5 converts the received radio frequency signal to an intermediate frequency (IF) signal which is amplified and is then re-converted to a radio frequency signal. In Fig. 7, the amplifier 2 operates at radio frequency, so no mixers 9 and 10 as in Fig. 5, nor local oscillators 11 and 12 as in Fig. 5 are provided in Fig. 7. Instead, a local oscillator 24 provides the offset frequency $\Delta f$. This is applied to the frequency converter 25, which shifts the radio frequency signal by $\Delta f$. The frequency converter 25 and the local oscillator 24 in Fig. 7 are provided at the input of the amplifier 2, but they may alternatively be provided at the output of the amplifier 2. The location of those components does not affect the operation of the repeater, since the whole system operates linearly with respect to an input signal.

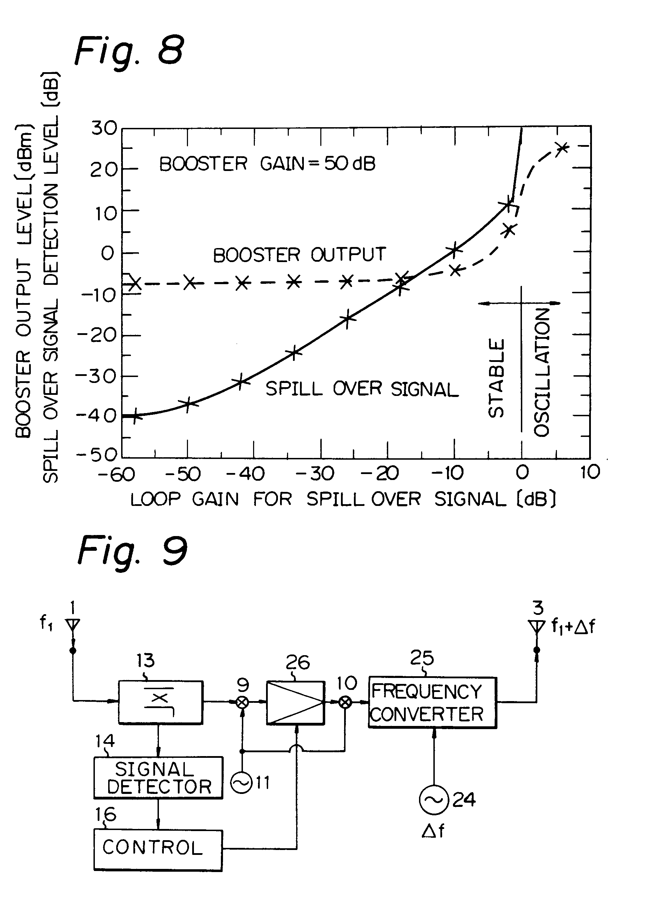

Fig. 8 shows experimental curves obtained with the present invention. The horizontal axis shows the loop gain for the spillover signal. If the loop gain exceeds 0 dB, the system oscillates, so the loop gain must be maintained lower than 0 dB. The vertical axis represents the spillover signal detection level, and the booster output level. The booster output is almost constant when the loop gain is less than -10 dB, and it increases suddenly, and the booster oscillates, when the loop gain is close to 0 dB. It is shown that the spillover is accurately detected in the region where the loop gain is in a range from -50 dB to 0 dB. In the experiment of Fig. 8, the booster gain was fixed at 50 dB.

Fig. 9 shows another embodiment of the present invention which uses a frequency converter comprising an infinite phase shifter. This embodiment has the advantage that the required accuracy of the local oscillator 11 is not so stringent as compared with the Figs. 3, 5 and 6 embodiments.

In Fig. 9, reference numerals which are the same as those in Fig. 5 relate to the same components. In this case the system includes a variable gain amplifier 26. The second mixer 10 receives the output of the local oscillator 11, which is common to both the first mixer 9 and the second mixer 10. It should be appreciated that the mixers 9 and 10, together with the local oscillator 11, may be omitted if the amplifier 26 operates in the radio frequency band as is the case of the embodiment of Fig. 7.

The received frequency $f_1$ is converted to an intermediate frequency (IF) by the first mixer 9, and is then amplified by the variable gain amplifier 26. The output of the amplifier 26 is then re-converted to the radio frequency $f_1$ by the second mixer 10. The frequency of the output of the second mixer 10 is shifted by $\Delta f$ by the frequency converter 25, and the shifted-frequency signal is transmitted in the air by the transmitting antenna 3. The operation of the directional coupler 13, the signal detector 14 and the control circuit 16 for measuring the spillover signal, and for controlling the gain of the amplifier, is the same as in the previous embodiments.

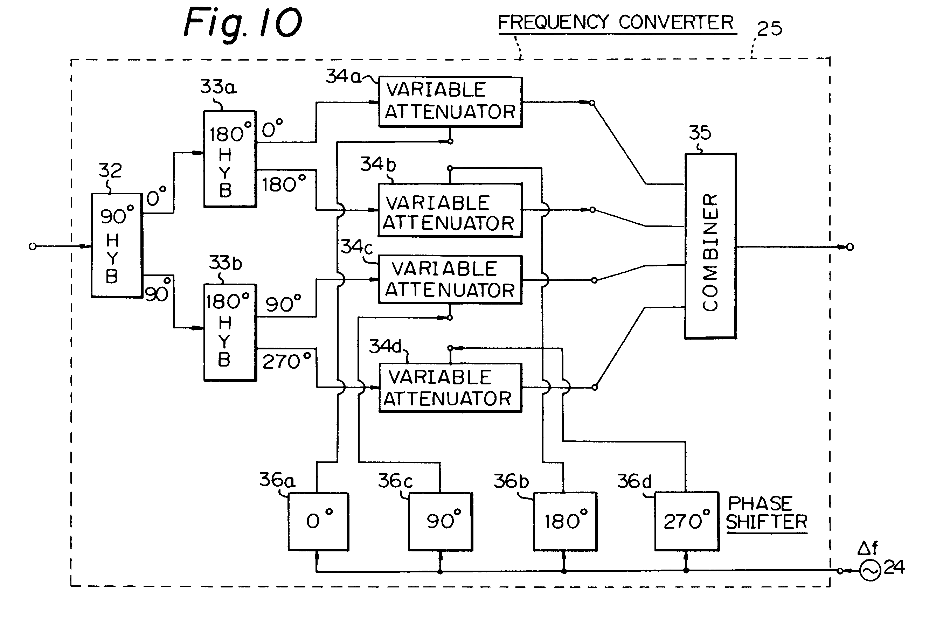

Fig. 10 is a block diagram of the frequency converter or infinite phase shifter 25. This comprises a 90° hybrid circuit 32 which divides the input signal into a pair of signals having the same amplitude and 90° phase difference relative to each other. 180° hybrid circuits 33a and 33b are connected to the outputs of the 90° hybrid 32, and each divides its input signal into a pair of outputs having equal amplitudes and 180° phase difference relative to each other. Variable attenuators 34a, 34b, 34c and 34d, connected to outputs of the hybrid circuits, are adjusted by respective control signals. The input levels of the variable attenuators 34a to 34d are equal to one another, and the phases of the input signals to those attenuators are shifted by 90° relative to one another by the hybrid circuits 32, 33a and 33b, so that the input signal phase of the first attenuator 34a is 0°, the input signal phase of the second attenuator 34b is 180°, the input signal phase of the third attenuator 34c is 90°, and the input signal phase of the fourth attenuator 34d is 270°. A combiner 35 combines the outputs of the attenuators. Phase shifters 36a, 36b, 36c and 36d are phase shifters which shift the low frequency signal of the oscillator 24 by 0°, 180°, 90° and 270°, respectively. The outputs of the phase shifters 36a to 36d provide the control signals for the variable attenuators 34a to 34d, respectively.

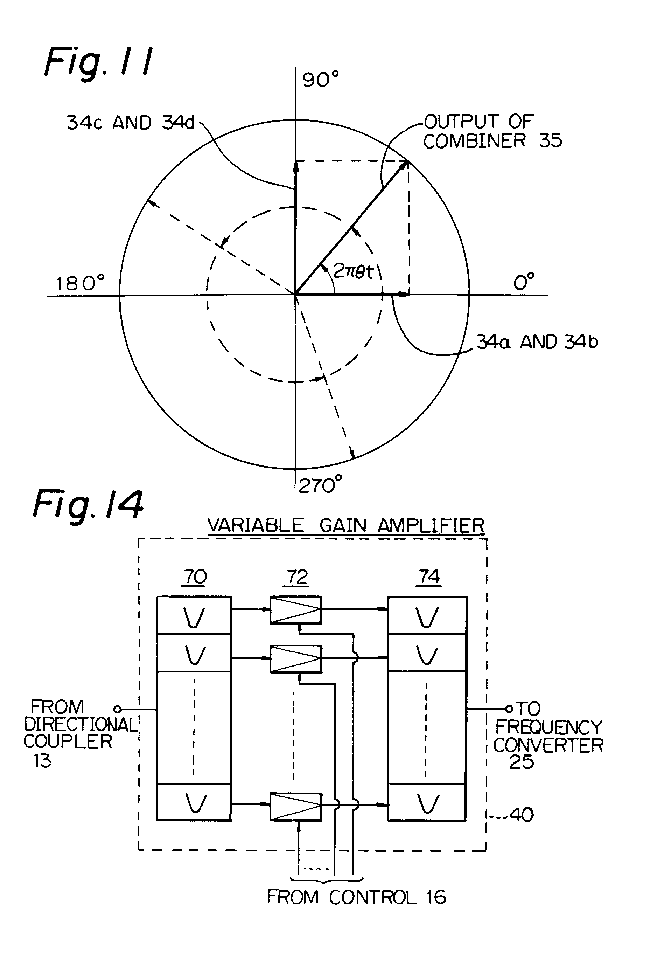

Fig. 11 illustrates the operation of the frequency converter of Fig. 10. The output vectors of the attenuators 34a and 34b are located on the line 0°-180° with opposite phase to each other, and the vector which is the composite of the two vectors oscillates as a simple harmonic motion. Similarly, the output vectors of the attenuators 34c and 34d are located on the line 90°-270° with opposite phase to each other, and the composite vector of the two vectors oscillates in a simple harmonic motion. Therefore, the composite vector of the attenuators 34a and 34b has a phase difference of 90° as compared to that of the attenuators 34c and 34d. The combination of the two composite vectors of the four attenuators in the combiner 35 provides a vector which rotates on a unit circuit by 360° for each cycle of the output signal Δf of the low frequency oscillator 24.

Hence, the transmission frequency $f_1+\Delta f$ is obtained at the output of the frequency converter 25 in Fig. 9 by using the offset low frequency Δf, and the radio frequency is directly shifted by Δf.

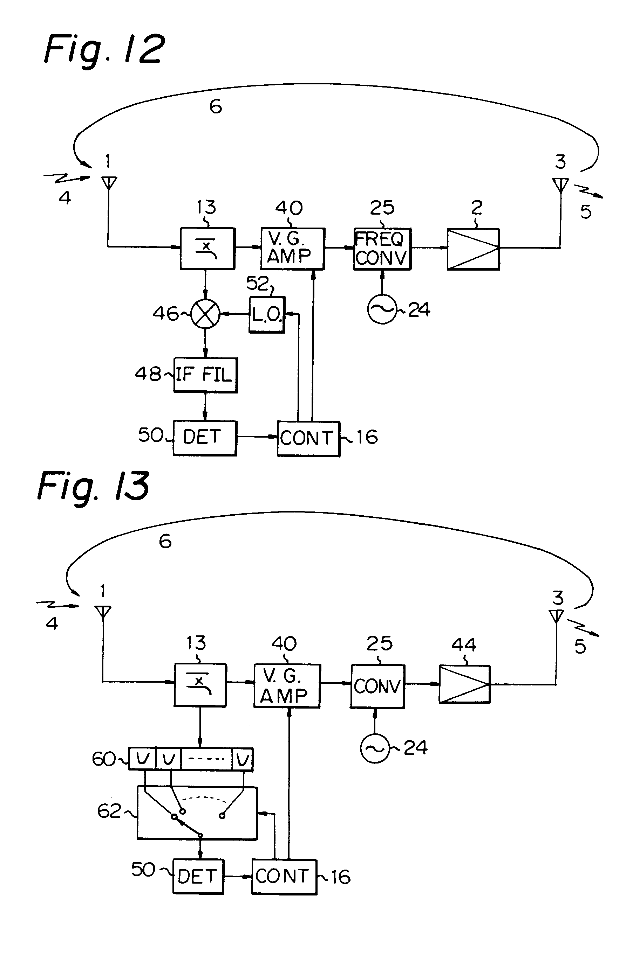

Figs. 12 and 13 show further embodiments of the invention. In these embodiments a plurality of radio channels are amplified by a single common amplifier, and the gain of the amplifier is controlled for each channel. These embodiments are advantageous when the transmission loss of the spillover signal is frequency-dependent. In the Fig. 12 embodiment the amplification for each channel is accomplished in an intermediate frequency stage, and in the Fig. 13 embodiment the amplification for each channel is accomplished in a radio frequency stage.

Referring to Fig. 12, a repeater comprises a receiving antenna 1, which receives a service signal 4 and a spillover signal 6, transmitting antenna 3 which transmits a signal 5, a directional coupler 13, a variable gain amplifier or a variable attenuator 40, a frequency converter 25, a fixed gain amplifier 2, a mixer 46, a bandpass filter 48 for deriving an IF signal for each channel, a signal detector 50 which is similar to that of Fig. 5, a control circuit 16 and an offset frequency oscillator 24.

The control circuit 16 sets the frequency of the local oscillator 52 so that a desired frequency band is obtained at the output of the mixer 46. The output of mixer is applied to the detector 50 via the bandpass filter 48. The detector 50 detects the spillover signal by detecting the offset frequency component Δf, as is the case in the previous embodiments, and the result of the detection for each band is applied to the control circuit 16. The control circuit 16 then feeds the control signal to the variable gain amplifier 40 so that the gain for the currently measured band is adjusted according to the corresponding spillover signal level. Thus, the gain of the repeater is adjusted so that it is at an optimum level for each band. In this embodiment, the loop gain of the spillover signal is uniform for all of the bands, and all of the bands can have the maximum gain whilst keeping a predetermined margin against oscillation.

As the embodiment of Fig. 12 has a variable-gain amplifier 40, the overall gain obtained from the variable-gain amplifier 40 and the fixed-gain amplifier 2 is variable.

It should be noted that the sequence of the disposition in the circuit of the variable-gain amplifier 40, the frequency converter 25 and the amplifier 2 is arbitrary. The amplifier 2 may be located at the input of the frequency converter 25, although in the described embodiment the amplifier is disposed at the output of the frequency converter 25.

Fig. 13 shows a modification of the embodiment of Fig. 12, and the feature of Fig. 13 is that the detection of the spillover signal by the detector 50 is accomplished at radio frequency, whereas in Fig. 12 the detection takes place in the IF band.

The repeater of Fig. 13 comprises a plurality of bandpass filters 60 and a switch 62 for selecting one of the outputs of the bandpass filters 60. The control circuit 16 controls the switch 62 so that the received frequency bands are scanned, and controls the gain (or attenuation) of the amplifier/attenuator 40 for the selected band.

Fig. 14 is a block diagram of the gain control circuit which forms the variable-gain amplifier (or variable attenuator) 40 in Figs. 12 and 13. The repeater of Fig. 14 includes a plurality of bandpass filters 70 coupled to the directional coupler 13, a plurality of attenuators 72 which are controlled by the control circuit 16, and a plurality of bandpass filters 74 coupled with the frequency converter 10. The bandpass filters 70 divide the frequency band of the input signal into a plurality of narrow bands. The bandwidth of each passband of the filter 70 is designed so that the frequency characteristic of the spillover signal is flat in that band, and that band corresponds to the band of the filter 60 in Fig. 13. The variable-gain amplifiers 72 are provided for respective outputs of the filters 70, and are controlled by the control circuit 16 so that the gain of the repeater in each band is the optimum depending upon the spillover level of each band. The filters 74 have a similar configuration to the filters 70, and combine the outputs of the variable gain amplifiers 72 so that the combined signal is fed to the frequency converter 25. Hence, by using the gain control of Fig. 14, the gain of the repeater is controlled for each frequency band.

## Claims

1. A repeater comprising a receiving antenna (1) for receiving a radio signal (4); an amplifier (2) for amplifying the signal thus received; a transmitting antenna (3) for transmitting the amplified signal; and a signal detector (14) which measures in the received signal a component of the received signal to determine the level of spillover (6) from the transmitting section to the receiving section; characterised by frequency offset means (24,25) to offset the transmitted frequency (5) by a frequency in the range 50Hz to 200Hz such that the offset frequency is higher than the fading frequency of the receiver and is sufficiently low so that it does not affect the operation of remote receivers receiving the transmitted signal; wherein the signal detector (14) is an envelope detector responsive to the receipt of a signal containing a component of the received signal at the offset frequency to determine the level of spillover (6) from the transmitting antenna to the receiving antenna by measuring the beat of the input signal envelope.

2. A repeater according to claim 1, characterised by means (16) for controlling the gain of the repeater according to the measured offset component level.

3. A repeater according to claim 1 or claim 2, characterised by a variable circuit comprising a variable phase shifter (20), a variable attenuator (21) and a delay circuit (22) which are adjusted in accordance with the measured offset component level; a signal separator (19) for feeding a part of the transmission signal to the variable circuit; and a signal combiner (18) for combining the received signal with the output of the variable circuit for cancelling the spillover signal.

4. A repeater according to any preceding claim, characterised in that the amplifier (2) operates at radio frequency.

5. A repeater according to any one of claims 1-3, characterised by means (11,9) for converting the received radio frequency signal to an intermediate frequency signal, whereby the amplifier (15) operates at the intermediate frequency; and means (12,10) for converting the amplified intermediate frequency signal to a radio frequency signal.

6. A repeater according to any preceding claim, characterised in that the frequency offset means (25) is an infinite phase shifter.

7. A repeater according to any preceding claim, characterised in that the received signal has a plurality of channels; the frequency offset means (25) is common to all of the channels; the signal detector includes a plurality of bandpass filters (70) corresponding to the channels, for measuring the offset component for each channel; and the control of the gain of the repeater is effected for each channel according to the measured offset component in the respective channel.

## Patentansprüche

1. Funkverstärkersystem mit einer Empfangsantenne (1) zum Empfangen eines Funksignals (4); einem Verstärker (2) zum Verstärken des empfangenen Signals; einer Sendeantenne (3) zum Aussenden des verstärkten Signals und einem Signaldetektor (14), der eine Komponente des empfangenen Signals mißt, um den Pegel eines Überlaufs (6) vom Sendeteil zum Empfangsteil zu ermitteln, **gekennzeichnet durch** ein Frequenzverschiebungsmittel (24, 25) zum Verschieben der Sendefrequenz (5) um eine Frequenz im Bereich von 50 Hz bis 200 Hz, so daß die Frequenzverschiebung höher als die Schwundhäufigkeit des Empfängers und hinreichend niedrig ist, so daß sie den Betrieb ferner Empfänger, die das Sendesignal empfangen, nicht stört; wobei der Signaldetektor (14) ein Hüllkurvendetektor ist, der in Abhängigkeit vom Empfang eines Signals, das eine Komponente des empfangenen Signals mit der Verschiebungsfrequenz aufweist, den Pegel des Überlaufs (6) von der Sendeantenne zur Empfangsantenne durch Messung der Schwebung der Eingangssignal-Hüllkurve ermittelt.

2. Funkverstärkersystem nach Anspruch 1, gekennzeichnet durch Mittel (16) zum Steuern der Verstärkung des Funkverstärkersystems in Abhängigkeit von dem gemessenen Verschiebungskomponentenpegel.

3. Funkverstärkersystem nach Anspruch 1 oder Anspruch 2, gekennzeichnet durch eine veränderbare Schaltung, die einen veränderbaren Phasenschieber (20), ein veränderbares Dämpfungsglied (21) und eine Verzögerungsschaltung (22) enthält, die in Abhängigkeit von dem gemessenen Verschiebungskomponentenpegel eingestellt werden; einen Signalseparator (19), der einen Teil des Sendesignals der veränderbaren Schaltung zuführt; und einen Signalsummierer (18) zum Überlagern des Empfangssignals und des Ausgangssignals der veränderbaren Schaltung, um das Überlaufsignal zu löschen.

4. Funkverstärkersystem nach einem der vorstehenden Ansprüche, dadurch gekennzeichnet, daß der Verstärker (2) mit der Funkfrequenz arbeitet.

5. Funkverstärkersystem nach einem der Ansprüche 1 bis 3, gekennzeichnet durch ein Mittel (11, 9) zum Umwandeln des empfangenen Funkfrequenzsignals in ein Zwischenfrequenzsignal, so daß der Verstärker (15) mit der Zwischenfrequenz arbeitet; und ein Mittel (12, 10) zum Umwandeln des verstärkten Zwischenfrequenzsignals in ein Funkfrequenzsignal.

6. Funkverstärkersystem nach einem der vorstehenden Ansprüche, dadurch gekennzeichnet, daß das Frequenzverschiebungsmittel (25) ein unbegrenzter Phasenschieber ist.

7. Funkverstärkersystem nach einem der vorstehenden Ansprüche, dadurch gekennzeichnet, daß das empfangene Signal mehrere Kanäle aufweist; das Frequenzverschiebungsmittel (25) allen Kanälen gemeinsam ist; der Signaldetektor mehrere Bandpaßfilter (70) aufweist, die den Kanälen entsprechen, um die Verschiebungskomponente für jeden Kanal zu messen; und die Steuerung der Verstärkung des Funkverstärkersystems für jeden Kanal in Abhängigkeit von der im jeweiligen Kanal gemessenen Verschiebungskomponente bewirkt wird.

**Revendications**

1. Répéteur comprenant une antenne réceptrice (1) pour recevoir un signal radio (4) ; un amplificateur (2) pour amplifier le signal ainsi reçu ; une antenne émettrice (3) pour transmettre le signal amplifié ; et un détecteur de signaux (14) qui mesure, dans le signal reçu, une composante du signal reçu pour déterminer le niveau de débordement (6) de la partie émettrice à la partie réceptrice ; caractérisé par des moyens de décalage de fréquence (24, 25) pour décaler la fréquence émise (5) d'une fréquence dans la gamme de 50 Hz à 200 Hz de telle manière que la fréquence décalée soit supérieure à la fréquence d'évanouissement du récepteur et soit suffisamment basse pour qu'elle n'affecte pas le fonctionnement de récepteurs éloignés, recevant le signal émis ; dans lequel le détecteur de signaux (14) est un détecteur d'enveloppe, qui réagit à la réception d'un signal contenant une composante du signal reçu à la fréquence décalée pour déterminer le niveau de débordement (6) de l'antenne émettrice à l'antenne réceptrice, en mesurant le battement de l'enveloppe du signal d'entrée.

2. Répéteur selon la revendication 1, caractérisé par un moyen (16) pour commander le gain du répéteur en fonction du niveau de la composante décalée mesurée.

3. Répéteur selon la revendication 1 ou la revendication 2, caractérisé par un circuit variable comprenant un déphaseur variable (20), un atténuateur variable (21) et un circuit à retard (22), qui sont réglés en fonction du niveau de la composante décalée mesurée ; un séparateur de signaux (19) pour fournir une partie du signal de transmission au circuit variable ; et un combineur de signaux (18) pour combiner le signal reçu avec la sortie du circuit variable pour éliminer le signal de débordement.

4. Répéteur selon l'une quelconque des revendications précédentes, caractérisé en ce que l'amplificateur (2) fonctionne à la fréquence radio.

5. Répéteur selon l'une quelconque des revendications 1 à 3, caractérisé par des moyens (11, 9) pour convertir le signal à fréquence radio reçu en un signal à fréquence intermédiaire, l'amplificateur (15) fonctionnant à la fréquence intermédiaire ; et des moyens (12, 10) pour convertir le signal à fréquence intermédiaire amplifié en un signal à fréquence radio.

6. Répéteur selon l'une quelconque des revendications précédentes, caractérisé en ce que le moyen de décalage de fréquence (25) est un déphaseur infini.

7. Répéteur selon l'une quelconque des revendications précédentes, caractérisé en ce que le signal reçu a une pluralité de voies ; en ce que le moyen de décalage de fréquence (25) est commun à toutes les voies ; en ce que le détecteur de signaux comprend une pluralité de filtres passe-bande (70) correspondant aux voies, pour mesurer la composante décalée pour chaque voie ; et en ce que la commande du gain du répéteur est effectuée pour chaque voie en fonction de la composante décalée mesurée dans la voie respective.

*Fig. 1*

*Fig. 2*

Fig. 3

Fig. 4

Fig. 5

10

# Fig. 6

# Fig. 7

## Fig. 8

## Fig. 9

*Fig. 10*

## Fig. 11

34c AND 34d

OUTPUT OF
COMBINER 35

90°

$2\pi\theta t$

180°

0°

270°

34a AND 34b

## Fig. 14

VARIABLE GAIN AMPLIFIER

70    72    74

FROM
DIRECTIONAL
COUPLER
13

TO
FREQUENCY
CONVERTER
25

40

FROM CONTROL 16

*Fig. 12*

*Fig. 13*